# EUROPÄISCHE PATENTSCHRIFT

(11) **EP 1 528 184 B1**
(45) Veröffentlichungstag und Bekanntmachung des Hinweises auf die Patenterteilung: **07.06.2006**
(21) Anmeldenummer: 04025464.1
(22) Anmeldetag: 27.10.2004
(51) Int. Cl.: E04F 21/12, B28C 5/18

(54) **Mobile Baumaschine mit Motorantrieb und Kraftstofftank**
Mobile construction equipment with drive motor and fuel tank
Matériel de construction mobile avec entraînement à moteur et réservoir de carburant

(30) Priorität: 31.10.2003 DE 10351279
(43) Veröffentlichungstag der Anmeldung: 04.05.2005
(73) Patentinhaber: Putzmeister Mörtelmaschinen GmbH, 72631 Aichtal (DE)
(72) Erfinder: Vetter, Helmut, 70599 Stuttgart (DE)
(74) Vertreter: Wolf, Eckhard

(56) Entgegenhaltungen:
- EP-A- 0 482 930
- US-A- 3 881 706
- US-A- 5 433 520
- US-A1- 2003 002 384
- US-A1- 2003 085 299

## Beschreibung

Die Erfindung betrifft eine mobile Baumaschine, insbesondere eine Mörtelspritzmaschine oder einen Drucklufterzeuger, mit einem in einem Motorraum angeordneten Antriebsmotor, mit einer den Motorraum nach unten abschließenden, an einem Fahrgestell fixierten Bodenabdeckung und mit einem als Kunststoff-Formteil ausgebildeten Kraftstofftank.

Bei Baumaschinen dieser Art ist der Antriebsmotor vor allem für den Antrieb von Arbeitsaggregaten bestimmt. Als Arbeitsaggregate kommen beispielsweise ein Kompressor, Misch- und Pumpaggregate in Betracht. Die Maschinen sind meist auf einem Anhängerchassis montiert, das einen von den Arbeitsaggregaten getrennten Motorraum aufweist. Der Motorraum ist aus Gründen der Sicherheit und des Schallschutzes durch Karosseriebleche abgedeckt und ist nach unten hin mit einer am Fahrgestellrahmen fixierten Bodenplatte verschlossen. Der Kraftstofftank befindet sich in einem hierfür vorgesehenen Freiraum innerhalb des Motorraums.

Bei motorgetriebenen Maschinen besteht stets die Gefahr, dass durch den Verschleiß von Dichtungen, durch platzende Schläuche oder durch auftretende Risse an irgendeiner Stelle des Motors oder an Zuleitungen Flüssigkeit austritt, die in den Bodenbereich des Motorraums gelangt und von dort nach außen dringt. Die meist recht einfachen und teilweise mit konstruktiven Öffnungen versehenen Bodenabdeckungen stellen außerdem keinen ausreichenden Schutz gegen Flüssigkeitsaustritt und Schallemission dar.

Ausgehend hiervon liegt der Erfindung die Aufgabe zugrunde, eine mobile Baumaschine der eingangs angegebenen Art mit einer neuartigen Bodenabdeckung zu entwickeln.

Zur Lösung dieser Aufgabe wird die im Anspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, dass der Kraftstofftank zugleich als Bodenabdeckung ausgebildet ist. Erfindungsgemäß weist der Kraftstofftank die Gestalt einer den Motorraum nach unten abschließenden doppelwandigen Bodenwanne mit einem über einen Einfüllstutzen zugänglichen Hohlraum zur Aufnahme von Kraftstoff auf.

Gemäß einer bevorzugten Ausgestaltung der Erfindung weist der Kraftstofftank an seiner oberen wannenförmigen Begrenzungswand eine Mulde auf, die an ihrer tiefsten Stelle in einen mit einem Deckel verschließbaren, den Hohlraum quer durchdringenden Abflusskanal mündet. Weiterhin weist der Kraftstofftank vorteilhafterweise hochgezogene doppelwandige Seitenränder auf, deren Außenflächen als mit benachbarten Karosserieteilen fluchtende Seitenblenden ausgebildet sind. Der Einfüllstutzen ist zweckmäßig an der oberen wannenförmigen Begrenzungswand angeordnet und greift nach oben in einen freien Teil des Motorraums ein. An der unteren Begrenzungswand können nach unten überstehende, hohl ausgebildete Verstärkungsrippen angeformt sein, durch die zugleich Luftführungskanäle für aus dem Motorraum austretende Abluft begrenzt sind. Außerdem können die seitlichen Wannenränder mit nach unten überstehenden, über die gesamte Länge der Bodenabdeckung sich erstreckenden Randrippen versehen sein. Dabei hat es sich als besonders vorteilhaft erwiesen, wenn an der Unterkante der Randrippen jeweils eine Längsnut eingeformt ist, in die ein am Rahmen fixierter Metallbügel als Verstärkungsteil eingreift. Zweckmäßig sind die Längsnuten über die endseitigen Begrenzungskanten der Randrippen nach oben verlängert, während die Metallbügel mit abgebogenen Enden in die Verlängerungen der Längsnuten eingreifen. An ihren Enden können die Metallbügel eine durch eine Rahmenöffnung hindurchgreifende Gewindepartie zur Aufnahme einer Befestigungsmutter aufweisen.

Die Entnahme und Rückführung des Kraftstoffs erfolgt über Anschlussstutzen, die beispielsweise an den Oberkanten der Randrippen angeordnet werden können und von denen zumindest einer mit einem im Hohlrauminneren bis zur Unterkante des Tankbodens führenden Ansaugrohr verbunden ist.

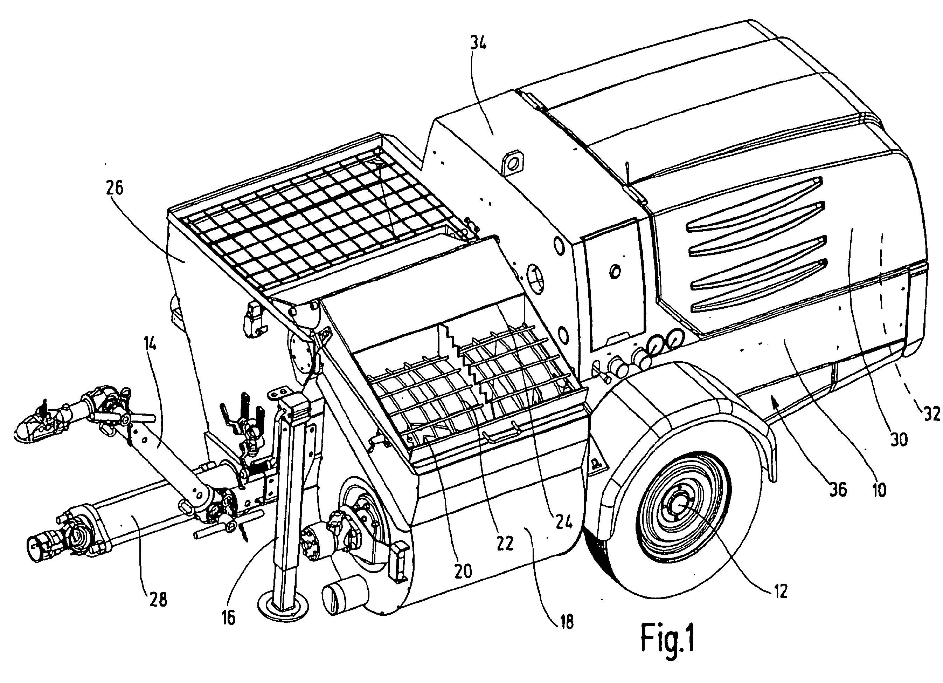

Im Folgenden wird die Erfindung anhand eines in der Zeichnung in schematischer Weise dargestellten Ausführungsbeispiels näher erläutert. Es zeigen
- Fig. 1: eine Mörtelspritzmaschine in schaubildlicher Darstellung;

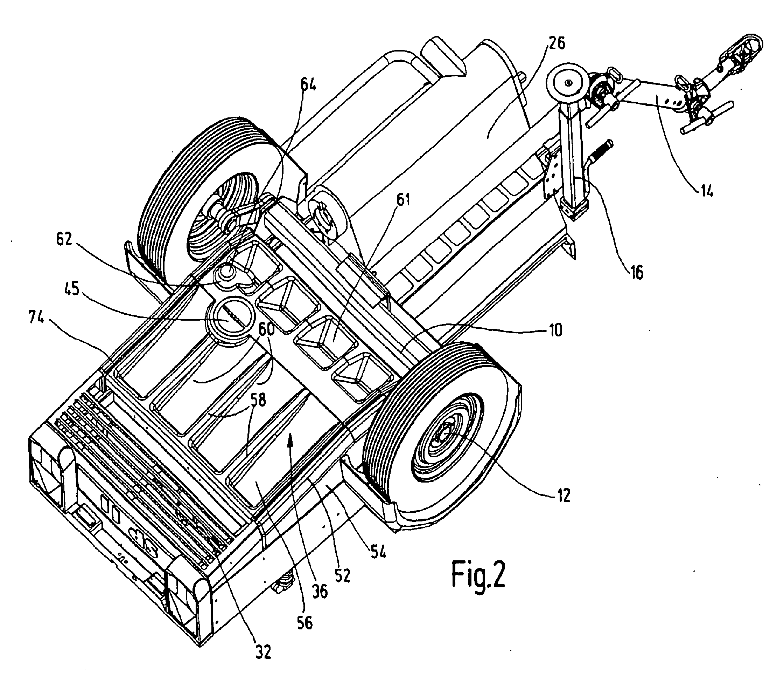

- Fig. 2: eine Untenansicht der Mörtelspritzmaschine in schaubildlicher Darstellung;
- Fig. 3a bis 3d: den Kraftstofftank der Mörtelspritzmaschine nach Fig. 1 und Fig. 2 in schaubildlicher Darstellung, in Draufsicht und in zwei Seitenansichten.

Die in der Zeichnung dargestellte Baumaschine ist als einachsiger Anhänger mit einem Fahrgestell 10, einer Radachse 12, einer Deichsel 14 und einem teleskopierbaren Stützbein 16 konzipiert. Auf dem Fahrgestell 10 befindet sich eine Mörtelspritzmaschine, bestehend aus einem Hubmischer 18 mit Mischwerk 20 und einem mit einem Einfüllgitter 22 versehenen Deckel 24 sowie aus einem Materialtrichter 26, an den in Bodennähe ein Schneckenförderer 28 angeschlossen ist. Im rückwärtigen Bereich des Fahrgestells befindet sich ein unter Karosserieblechen 30 angeordneter Motorraum 32, in welchem ein nicht sichtbarer Verbrennungsmotor für den Antrieb der verschiedenen Arbeitsaggregate sowie ein motorisch angetriebener Kompressor angeordnet ist. Zwischen den Arbeitsaggregaten und dem Motorraum befindet sich ein Gehäuse 34 zur Aufnahme der für den Betrieb der Baumaschine erforderlichen Steuer- und Kupplungsaggregate sowie gegebenenfalls eines Wassertanks.

Eine Besonderheit der Erfindung besteht darin, dass der Kraftstofftank 36 für die Kraftstoffversorgung des Antriebsmotors zugleich als Bodenabdeckung in der Gestalt einer doppelwandigen Bodenwanne mit einem über einen Einfüllstutzen 44 zugänglichen Hohlraum 46 zur Aufnahme von Kraftstoff ausgebildet ist. Der Kraftstofftank 36 weist an seiner oberen, wannenförmigen Begrenzungswand 38 eine Mulde 40 auf, die an ihrer tiefsten Stelle 42 in einen mit einem Deckel 45 verschließbaren, den Hohlraum 46 durchdringenden Abflusskanal 50 mündet. Der Kraftstofftank 36 weist ferner hochgezogene doppelwandige Seitenränder 52 auf, deren Außenflächen 54 als mit benachbarten Karosserieteilen fluchtende Seitenblenden ausgebildet sind. Der Einfüllstutzen 44 ist an der oberen wannenförmigen Begrenzungswand 38 angeformt und greift in einen freien Teil des Motorraums ein. An der unteren Begrenzungswand 56 sind nach unten überstehende, hohl ausgebildete Verstärkungsrippen 58 angeformt, zwischen denen als Lüftungskanäle ausgebildete Freiräume 60 frei bleiben. Auch die Sicken 61 ergeben eine Aussteifung der unteren Begrenzungswand 56 im vorderen Bereich. In einem tiefliegenden Abschnitt der unteren Bodenwand 56 ist ein nach unten gezogener Stutzen 62 mit einer verschließbaren Öffnung 64 angeordnet, über den Kraftstoff aus dem Hohlraum 46 abgelassen werden kann. An den Oberkanten der hochgezogenen Seitenränder 52 befinden sich zwei Anschlussstutzen 66, an die im eingebauten Zustand Kraftstoffleitungen anschließbar sind. Einer der Anschlussstutzen 66 ist als Saugstutzen ausgebildet, an dem im Inneren des Hohlraums 46 ein bis zum Tankboden reichendes, nicht dargestelltes Saugrohr angeschlossen ist, während der andere Anschlussstutzen 66 als Rücklaufstutzen ausgebildet ist, über den zirkulierender Treibstoff in den Kraftstofftank 36 zurückgeführt wird.

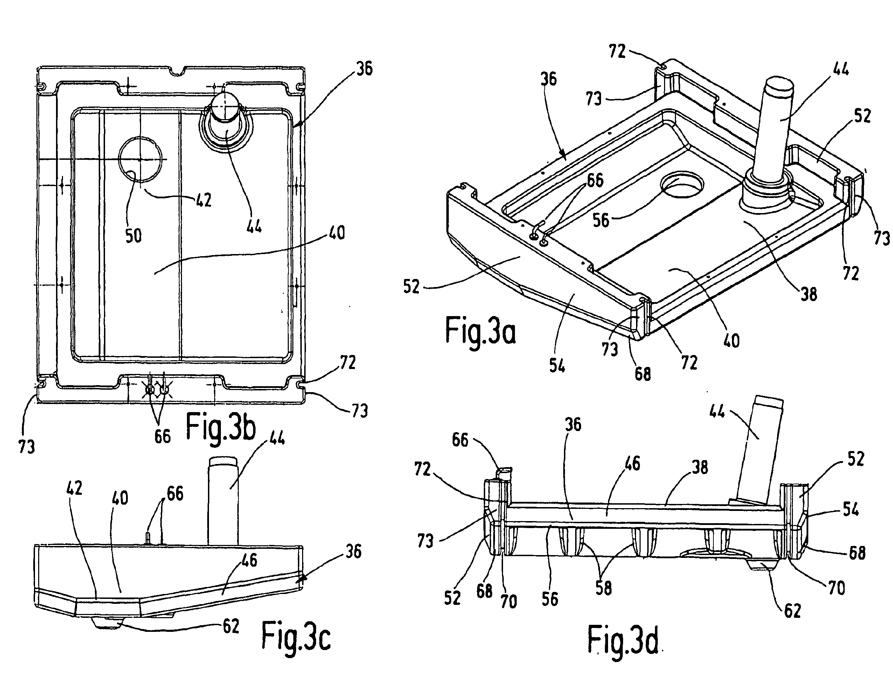

An den beiden Seitenrändern 52 stehen nach unten Randrippen 68 über, in die Längsnuten 70 eingeformt sind, die an ihren Enden 72 über die endseitigen Begrenzungskanten 73 nach oben geführt sind (vgl. Fig. 3a und 3b). In die Nuten 70, 72 greift je ein Metallbügel 74 ein, der mit seinen nach oben abgebogenen Enden am Fahrgestell 10 eine nicht dargestellte Gewindepartie aufweist.

Der als Bodenwanne ausgebildet Kraftstofftank 36 bildet eine geschlossene Bodenabdeckung und sorgt somit im Bodenbereich für eine wirksame Abdichtung gegen Schallemissionen aus dem Motorraum. Etwaige aus dem Motor oder den am Motor befindlichen Aggregaten austretende Flüssigkeiten oder Teile werden in der Mulde aufgefangen und können über den Abflusskanal 50 gezielt nach unten abgelassen werden.

Zusammenfassend ist folgendes festzuhalten: Die Erfindung bezieht sich auf eine mobile Baumaschine, beispielsweise eine Mörtelspritzmaschine oder einen Drucklufterzeuger. Die Baumaschine weist einen in einem Motorraum 32 angeordneten Antriebsmotor mit einer den Motorraum 32 nach unten abschließenden, an einem Fahrgestell 10 fixierbaren Bodenabdeckung und mit einem als Kunststoff-Formteil ausgebildeten Kraftstofftank 36 auf. Erfindungsgemäß weist der Kraftstofftank 36 eine Mehrfachfunktion auf. Er ist zugleich als Bodenabdeckung ausgebildet und weist zu diesem Zweck die Gestalt einer den Motorraum 32 nach unten abschließenden doppelwandigen Bodenwanne mit einem über einen Einfüllstutzen 44 zugänglichen Hohlraum 46 zur Aufnahme von Kraftstoff auf.

## Patentansprüche

1. Mobile Baumaschine, insbesondere Mörtelspritzmaschine oder Drucklufterzeuger, mit einem in einem Motorraum (32) angeordneten Antriebsmotor, mit einer den Motorraum nach unten abschließenden, an einem Fahrgestell (10) fixierten Bodenabdeckung und mit einem als Kunststoff-Formteil ausgebildeten Kraftstofftank (36), **dadurch gekennzeichnet, dass** der Kraftstofftank (36) zugleich die Bodenabdeckung bildet.

2. Mobile Baumaschine nach Anspruch 1, **dadurch gekennzeichnet, dass** der Kraftstofftank (36) die Gestalt einer den Motorraum (32) nach unten abschließenden doppelwandigen Bodenwanne mit einem über einen Einfüllstutzen (44) zugänglichen Hohlraum (46) zur Aufnahme von Kraftstoff aufweist.

3. Mobile Baumaschine nach Anspruch 1 oder 2, **dadurch gekennzeichnet, dass** der Kraftstofftank (36) an seiner oberen wannenförmigen Begrenzungswand (38) eine Mulde (40) aufweist, die an ihrer tiefsten Stelle (42) in einen mit einem Deckel (45) verschließbaren, den Hohlraum (46) durchdringenden Abflusskanal (50) mündet.

4. Mobile Baumaschine nach einem der Ansprüche 1 bis 3, **dadurch gekennzeichnet, dass** der Kraftstofftank (36) hochgezogene doppelwandige Seitenränder (52) aufweist, deren Außenflächen (54) als mit benachbarten Karosserieteilen (30) fluchtende Seitenblenden ausgebildet sind.

5. Mobile Baumaschine nach einem der Ansprüche 1 bis 4, **dadurch gekennzeichnet, dass** der Einfüllstutzen (44) an der oberen wannenförmigen Begrenzungswand (38) angeformt ist und nach oben in einen freien Teil des Motorraums (32) eingreift.

6. Mobile Baumaschine nach einem der Ansprüche 1 bis 5, **dadurch gekennzeichnet, dass** an der unteren Begrenzungswand (56) nach unten überstehende, vorzugsweise hohl ausgebildete Verstärkungsrippen (58) angeformt sind.

7. Mobile Baumaschine nach Anspruch 6, **dadurch gekennzeichnet, dass** durch die Verstärkungsrippen (58, 68) zugleich Lüftungskanäle (60) begrenzt sind.

8. Mobile Baumaschine nach einem der Ansprüche 1 bis 7, **dadurch gekennzeichnet, dass** die seitlichen Wannenränder (52) nach unten überstehende, über die gesamte Länge der Bodenwanne sich erstreckende Randrippen (68) aufweisen.

9. Mobile Baumaschine nach Anspruch 8, **dadurch gekennzeichnet, dass** an der Unterkante der Randrippen (68) jeweils eine Längsnut (70) eingeformt ist, in die ein am Fahrgestell (10) fixierter Metallbügel (74) eingreift.

10. Mobile Baumaschine nach Anspruch 9, **dadurch gekennzeichnet, dass** die Längsnuten (70) über die endseitigen Begrenzungskanten (73) der Randrippen (68) nach oben verlängert sind, und dass die Metallbügel (74) mit abgebogenen Enden in die nach oben weisenden Verlängerungen (72) eingreifen.

11. Mobile Baumaschine nach Anspruch 8 oder 9, **dadurch gekennzeichnet, dass** die Metallbügel (74) an ihren Enden eine durch eine fahrgestellfeste Öffnung hindurchsteckbare Gewindepartie zur Aufnahme einer Befestigungsmutter aufweisen.

12. Mobile Baumaschine nach einem der Ansprüche 1 bis 11, **dadurch gekennzeichnet, dass** an den Oberkanten der Randrippen (68) zwei Anschlussstutzen (66) angeordnet sind, von welchen mindestens einer im Hohlrauminneren mit einem bis zum Hohlraumboden führenden Saugrohr verbunden ist.

## Claims

1. Mobile construction machine, in particular a mortar-spraying machine or an air compressor, having a drive motor disposed in a motor compartment (32), having a bottom cover that closes off the motor compartment in a downward direction and is fixed to a chassis (10), and having a fuel tank (36) in the form of a moulded plastic part, **characterized in that** the fuel tank (36) simultaneously forms the bottom cover.

2. Mobile construction machine according to claim 1, **characterized in that** the fuel tank (36) takes the form of a double-walled bottom tray, which closes off the motor compartment (32) in a downward direction and has a cavity (46) for receiving fuel that is accessible via a filler neck (44).

3. Mobile construction machine according to claim 1 or 2, **characterized in that** the fuel tank (36) in its upper tray-shaped boundary wall (38) has a trough. (40), which at its deepest point (42) opens out into a discharge channel (50), which is closable with a lid (45) and penetrates the cavity (46).

4. Mobile construction machine according to one of claims 1 to 3, **characterized in that** the fuel tank (36) has raised double-walled side edges (52), the outer surfaces (54) of which are designed as lateral covers that are flush with adjacent body parts (30).

5. Mobile construction machine according to one of claims 1 to 4, **characterized in that** the filler neck (44).is integrally moulded on the upper tray-shaped boundary wall (38) and engages up into a free part of the motor compartment (32).

6. Mobile construction machine according to one of claims 1 to 5, **characterized in that** on the bottom boundary wall (56) downwardly projecting, preferably hollow reinforcement ribs (58) are integrally moulded.

7. Mobile construction machine according to claim 6, **characterized in that** air ducts (60) are simultaneously delimited by the reinforcement ribs (58, 68) .

8. Mobile construction machine according to one of claims 1 to 7, **characterized in that** the side tray edges (52) have downwardly projecting marginal ribs (68), which extend over the entire length of the bottom tray.

9. Mobile construction machine according to claim 8, **characterized in that** in the bottom edge of each of the marginal ribs (68) a longitudinal groove (70) is formed, into which a metal bracket (74) fixed to the chassis (10) engages.

10. Mobile construction machine according to claim 9, **characterized in that** the longitudinal grooves (70) are extended up over the end boundary edges (73) of the marginal ribs (68), and that the metal brackets (74) engage with bent ends into the upwardly pointing extensions (72).

11. Mobile construction machine according to claim 8 or 9, **characterized in that** the metal brackets (74) on their ends have a threaded portion, which is insertable through a chassis-fixed opening, for receiving a fastening nut.

12. Mobile construction machine according to one of claims 1 to 11, **characterized in that** disposed on the upper edges of the marginal ribs (68) are two connectors (66), of which at least one is connected in the cavity interior to an intake pipe leading to the cavity base.

## Revendications

1. Machine mobile pour chantiers de construction, notamment machine d'injection de mortier ou générateur d'air comprimé, comprenant un moteur d'entraînement logé dans un compartiment moteur (32) ; un chemisage de fond, fixé à un châssis de roulement (10) et obturant ledit compartiment moteur vers le bas ; et un réservoir (36) de carburant, réalisé sous la forme d'une pièce venue de moulage en matière plastique, **caractérisée par le fait que** ledit réservoir (36) de carburant matérialise simultanément ledit chemisage de fond.

2. Machine mobile selon la revendication 1, **caractérisée par le fait que** le réservoir (36) de carburant revêt la forme d'une cuvette à double paroi obturant le compartiment moteur (32) vers le bas, avec une cavité (46) accessible par l'intermédiaire d'un embout de remplissage (44), en vue de recevoir du carburant.

3. Machine mobile selon la revendication 1 ou 2, **caractérisée par le fait que** le réservoir (36) de carburant présente, sur sa paroi supérieure de délimitation (38) en forme de cuvette, une auge (40) débouchant, par sa zone (42) la plus profonde, dans un canal d'évacuation (50) parcourant la cavité (46) et obturable au moyen d'un couvercle (45).

4. Machine mobile selon l'une des revendications 1 à 3, **caractérisée par le fait que** le réservoir (36) de carburant comporte des bords latéraux relevés (52) à double paroi, dont les surfaces extérieures (54) sont conçues comme des panneaux de carénage latéral coïncidant avec des parties de carrossage (30) voisines.

5. Machine mobile selon l'une des revendications 1 à 4, **caractérisée par le fait que** l'embout de remplissage (44) fait corps avec la paroi supérieure de délimitation (38) en forme de cuvette et pénètre, vers le haut, dans une partie libre du compartiment moteur (32).

6. Machine mobile selon l'une des revendications 1 à 5, **caractérisée par le fait que** des nervures de rigidification (58), saillant vers le bas et offrant de préférence une réalisation creuse, sont solidaires de la paroi inférieure de délimitation (56).

7. Machine mobile selon la revendication 6, **caractérisée par le fait que** des canaux de ventilation (60) sont simultanément délimités par les nervures de rigidification (58, 68).

8. Machine mobile selon l'une des revendications 1 à 7, **caractérisée par le fait que** les bords latéraux (52) de la cuvette comportent des nervures marginales (68) faisant saillie vers le bas, s'étendant sur toute la longueur de ladite cuvette.

9. Machine mobile selon la revendication 8, **caractérisée par le fait qu'**une rainure longitudinale respective (70), dans laquelle pénètre un étrier métallique (74) assujetti au châssis de roulement (10), est pratiquée sur l'arête inférieure des nervures marginales (68).

10. Machine mobile selon la revendication 9, **caractérisée par le fait que** les rainures longitudinales (70) sont prolongées, vers le haut, au-delà des arêtes extrêmes de délimitation (73) des nervures marginales (68) ; et **par le fait que** les étriers métalliques (74) pénètrent, par des extrémités coudées, dans les prolongements (72) orientés vers le haut.

11. Machine mobile selon la revendication 8 ou 9, **caractérisée par le fait que** les étriers métalliques (74) peuvent posséder, à leurs extrémités, une partie filetée destinée à recevoir un écrou de fixation et pouvant être emboîtée dans un orifice solidaire du châssis de roulement.

12. Machine mobile selon l'une des revendications 1 à 11, **caractérisée par le fait que** deux embouts de raccordement (66) sont disposés sur les arêtes supérieures des nervures marginales (68), embouts dont au moins l'un est relié, à l'intérieur de la cavité, à une tubulure d'aspiration s'étendant jusqu'au fond de ladite cavité.
